Europäisches Patentamt

European Patent Office

Office européen des brevets

(11) Veröffentlichungsnummer: **0 245 720**
**A2**

## (12) EUROPÄISCHE PATENTANMELDUNG

(21) Anmeldenummer: **87106332.7**

(22) Anmeldetag: **01.05.87**

(51) Int. Cl.³: **F 16 H 3/66**

(30) Priorität: **06.05.86 DE 3615367**

(43) Veröffentlichungstag der Anmeldung:
**19.11.87 Patentblatt 87/47**

(84) Benannte Vertragsstaaten:
**AT BE FR IT**

(71) Anmelder: **GETRAG Getriebe- und Zahnradfabrik GmbH**
**Postfach 449 Solitudeallee 24**
**D-7140 Ludwigsburg(DE)**

(72) Erfinder: **Rack, Monika**
**Hauffstrasse 4**
**D-7145 Markgröningen(DE)**

(72) Erfinder: **Rühle, Günter**
**Karl-Gärttner-Strasse 21**
**D-7120 Bietigheim-Bissingen(DE)**

(74) Vertreter: **Witte, Alexander, Dr.**
**Schickhardtstrasse 24**
**D-7000 Stuttgart 1(DE)**

(54) **Viergang-Umlaufgetriebe.**

(57) Bei einem Viergang-Umlaufgetriebe mit zwei axial hintereinander angeordneten Planetensätzen sind die Sonnenräder (4, 11) beider Planetensätze entweder mit dem Gehäuse (1) oder der zugeordneten Eingangswelle (2) bzw. Ausgangswelle (3) verbindbar. Die Eingangswelle (2) ist mit dem Steg (7) des ersten Planetensatzes verbunden. Bei einer Ausführungsform des Getriebes ist die Ausgangswelle (3) mit dem Hohlrad (13) verbunden. Endlich ist das Hohlrad (6) des eingangsseitigen Planetensatzes mit dem Steg (15) des ausgangsseitigen Planetensatzes verbunden. Bei einer anderen Ausführungsform ist auch die Ausgangswelle mit dem Steg des zugeordneten Planetensatzes verbunden, während die Verbindung der Getriebe an den Hohlrädern erfolgt.

Fig. 2

EP 0 245 720 A2

Anmelderin:

Firma
GETRAG Getriebe- und
Zahnradfabrik GmbH
Solitudeallee 24
D-7140 Ludwigsburg

Vertreter:

Kohler-Schwindling-Späth
Patentanwälte
Hohentwielstraße 41
7000 Stuttgart 1

Stuttgart, den 29. April 1987
P 4895 EP

## Viergang-Umlaufgetriebe

Die Erfindung betrifft ein Viergang-Umlaufgetriebe mit zwei
axial hintereinander angeordneten Planetensätzen, von denen
zum Schalten der Gänge jeder ein mittels Kupplungen wahlweise mit dem Gehäuse oder einem anderen Getriebeteil verbindbares Getriebeteil aufweist.

Ein solches Viergang-Umlaufgetriebe ist beispielsweise aus
Bussien: "Automobiltechnisches Handbuch", 18. Aufl., 1965,
Seite 240, Bild 18 und Seite 306, Schema-Bild 130, bekannt.
Dieses bekannte Getriebe weist außer den zum Schalten dienenden Kupplungen eine hydrodynamische Kupplung auf, die
zwischen die beiden Planetensätze geschaltet ist. Dieses
Getriebe hat mit seinen Kupplungen ein sehr großes Bauvolumen und daher einen Platzbedarf, wie er in modernen Kraftfahrzeugen nicht mehr zur Verfügung steht.

Der Erfindung liegt die Aufgabe zugrunde, den Aufbau eines
solchen Getriebes so zu verbessern, daß bei gedrängter
Bauweise ein hoher Wirkungsgrad erreicht wird, so daß ein
solches Getriebe auch dann eingesetzt werden kann, wenn nur
wenig Platz zur Verfügung steht und trotzdem hohe Leistungen
übertragen werden müssen. So soll es insbesondere als Vierfach-Lastschaltsplitter für Nutzfahrzeuge geeignet sein.

Diese Aufgabe wird nach der Erfindung dadurch gelöst, daß
die Sonnenräder beider Planetensätze entweder mit dem Gehäuse oder der zugeordneten Eingangswelle bzw. Ausgangswelle
verbindbar sind, daß die Eingangswelle mit dem Steg des
ersten Planetensatzes und die Ausgangswelle entweder mit dem
Hohlrad oder ebenfalls mit dem Steg des zweiten Planetensatzes verbunden ist und daß das Hohlrad des ersten Planetensatzes im ersten Fall mit dem Steg und im zweiten Fall
mit dem Hohlrad des zweiten Planetensatzes verbunden ist.

Durch die Maßnahme, die Sonnenräder beider Planetensätze
entweder mit dem Gehäuse oder der zugeordneten Eingangs-bzw.
Ausgangswelle zu verbinden, wird ein symmetrischer Aufbau des Getriebes möglich, der zu einem besondes gedrängten
Aufbau ausgenutzt werden kann. Insbesondere ist es dadurch
ohne weiteres möglich, die Kupplungen an den Außenseiten der
dicht benachbart zueinander angeordneten Planetensätze
anzubringen, weil auch die Sonnenräder ohne weiteres an den
Außenseiten der Planetensätze angebracht und dort in einfacher Weise wahlweise mit dem Gehäuse oder der Welle gekuppelt werden können. Demgemäß sieht eine bevorzugte Ausführungsform der Erfindung vor, daß die Kupplungen axial vor
bzw. hinter dem zugeordneten Planetensatz und die die Sonnenräder mit den Wellen verbindenden Kupplungen jeweils
innerhalb der die Sonnenräder mit dem Gehäuse verbindenden
Kupplungen angeordnet sind. In weiterer Ausgestaltung der
Erfindung können dann die Sonnenräder jeweils mit einem
Kranz verbunden sein, an dessen Außen- und Innenseiten
Kupplungslamellen angeordnet sind, die mit gehäusefesten
Kupplungslamellen bzw. mit an der zugeordneten Welle angebrachten Kupplungslamellen zusammenwirken.

Diese Ausbildung des Getriebes bietet weiterhin in vorteilhafter Weise die Möglichkeit, daß die Kupplungen mit in
Axialrichtung auf die Kupplungslamellen wirkenden hydraulischen Kolben versehen sind. Besonders vorteilhaft ist es,
wenn ein hydraulischer Kolben nur jeweils auf die die Verbindung zwischen Sonnenrad und Gehäuse herstellenden Kupplungslamellen wirkt, wogegen die die Verbindung zwischen
Sonnenrad und zugeordneter Welle herstellenden Kupplungslamellen von einer Feder belastet werden. Diese Anordnung kann
dann so getroffen werden, daß das Schließen der die Verbindung zum Gehäuse herstellenden Kupplung eine Verschiebung der Kupplungslamellen am Kranz des Sonnenrades zur Folge
hat, durch die gegen die Kraft der Feder die Verbindung
zwischen Sonnenrad und zugeordneter Welle gelöst wird. Die
hierbei verwendete Feder kann vorteilhaft eine Tellerfeder
sein.

Die zuletzt beschriebene Ausführungsform der Erfindung hat
den besonderen Vorteil, daß ein hydraulischer Kolben nur in
dem feststehenden Gehäuse angeordnet zu werden braucht, so
daß keine Kolben in umlaufenden Getriebe- oder Kupplungsteilen angeordnet und mit einem Druckmedium versorgt werden
müssen. Ein weiterer Vorteil besteht darin, daß auch bei
Ausfall des zum Schalten des Getriebes erforderlichen Druckmediums, also insbesondere einer Hydraulik, die die Verbindung zwischen den Sonnenrädern und den zugeordneten Wellen
herstellenden Kupplungen geschlossen sind, so daß eine
definierte Verbindung über das Getriebe zwischen Eingangs-
und Ausgangswelle erhalten bleibt. Vorzugsweise wird hier
eine Übersetzung gewählt, die einen Fahrbetrieb noch zuläßt,
damit ein mit einem solchen Getriebe versehenes Fahrzeug aus
eigener Kraft eine Werkstatt erreichen kann.

Die Erfindung wird im folgenden anhand der in der Zeichnung
dargestellten Ausführungsbeispiele näher beschrieben und
erläutert. Die der Beschreibung und der Zeichnung zu entnehmenden Merkmale können bei anderen Ausführungsformen der
Erfindung einzeln für sich oder zu mehreren in beliebiger
Kombination Anwendung finden. Es zeigen

Fig. 1    einen Längsschnitt durch ein Getriebe nach der
          Erfindung,

Fig. 2    das Gangschaltschema des Getriebes nach Fig. 1 und

Fig. 3   das Gangschaltschema einer weiteren Ausführungsform
         eines Getriebes nach der Erfindung.

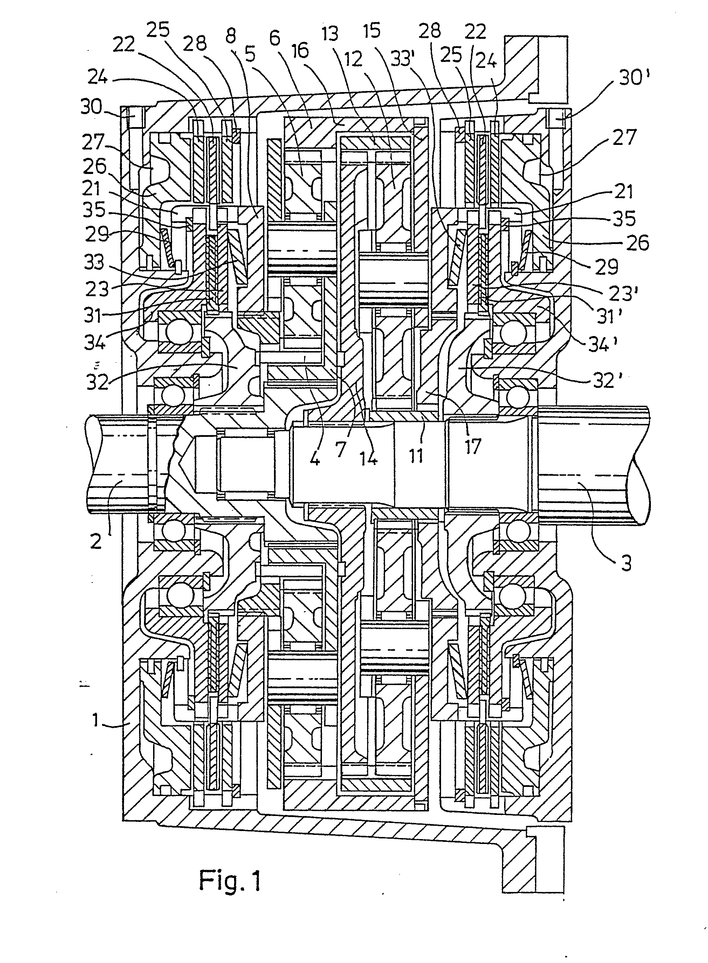

Bei dem in Fig. 1 dargestellten Getriebe sind in einem
Gehäuse 1 koaxial zueinander eine Eingangswelle 2 und eine
Ausgangswelle 3 gelagert. Jeder dieser beiden Wellen 2, 3
ist ein Planetensatz zugeordnet. Der der Eingangswelle 2
zugeordnete Planetensatz umfaßt ein Sonnenrad 4, Planetenräder 5 und ein Hohlrad 6. Die Planetenräder 5 sind in
einem Steg 7 gelagert, der am Ende der Eingangswelle 2
befestigt ist, und befinden sich auf dessen der Eingangswelle 2 zugewandten Außenseite. Das Sonnenrad 4 befindet sich
an einem im wesentlichen scheibenförmigen Träger 8, der sich
an den Steg 7 mit den Planetenrädern 5 nach außen anschließt.

Der der Ausgangswelle 3 zugeordnete Planetensatz umfaßt
ebenfalls ein Sonnenrad 11, Planetenräder 12 und ein Hohlrad 13. Das Hohlrad 13 befindet sich am Rand einer Scheibe 14, die am Ende der Ausgangswelle 3 dicht neben dem am
Ende der Eingangswelle 2 befestigten Steg 7 angeordnet ist.
Die Planetenräder 12 befinden sich an der der Ausgangswelle 3 zugewandten Außenseite der Scheibe 14 und werden von
einem Steg 15 getragen, der mit dem Hohlrad 6 des der Eingangswelle 2 zugeordneten Planetensatzes durch ein das
Hohlrad 13 des anderen Planetensatzes umgreifendes Verbindungsstück 16 verbunden ist. Das Sonnenrad 11 ist wiederum
am inneren Rand eines scheibenförmigen Trägers 17 befestigt,
der an der Außenseite des Steges 15 angeordnet ist.

Die Sonnenräder 4 und 11 sind wahlweise mit der Eingangswelle 2 bzw. Ausgangswelle 3 oder aber dem Gehäuse 1 mittels Kupplungen verbindbar. Die Kupplungen für die beiden Sonnenräder 4 und 11 sind spiegelsymmetrisch aufgebaut, so daß nur die einem dieser Sonnenräder zugeordneten Kupplungen beschrieben zu werden brauchen. Im folgenden wird daher die Kupplungsanordnung im einzelnen beschrieben, die zu dem Planetensatz gehört, der der Eingangswelle 2 zugeordnet ist. Die Bauteile der Kupplungsanordnung, die dem Planetensatz der Ausgangswelle 3 zugeordnet sind, sind mit den gleichen, jedoch gestrichenen Bezugsziffern versehen wie die entsprechenden Bauteile der Kupplungsanordnung, die zu dem der Eingangswelle 2 zugeordneten Planetensatz gehört.

Der scheibenförmige Träger 8 des Sonnenrades 4 ist an seinem äußeren Rand mit einem sich nach außen erstreckenden Kranz 21 versehen, an dessen Außen- und Innenseiten unverdrehbar, aber axial verschieblich gehaltene Kupplungslamellen 22, 23 angeordnet sind. Die radial außen liegende Kupplungslamelle 22 greift zwischen zwei Kupplungslamellen 24, 25 ein, die im Gehäuse 1 ebenfalls in Axialrichtung verschiebbar, aber unverdrehbar gehalten sind. Auf die in Axialrichtung außen liegende Kupplungslamelle 24 wirkt ein im Gehäuse 1 verschiebbar gelagerter Kolben 26 ein, dessen Außenseite mit benachbarten Gehäuseteilen eine Kammer 27 bildet, der über eine Bohrung 30 ein Druckmedium zugeführt werden kann, insbesondere Hydrauliköl. Wird der Kolben 26 mit einem Druckmedium beaufschlagt, bewegt er sich gegen die von den Kupplungslamellen 24, 22, 25 gebildete Reibungskupplung und klemmt die mit dem Sonnenrad 4 verbundene Kupplungslamelle 22 zwischen den mit dem Gehäuse verbundenen Kupplungslamellen 24, 25 fest, von denen die eine an einem gehäusefesten Anschlagring 28 Anlage findet. Der Kolben 26
wird von einer sich im Gehäuse 1 abstützenden Tellerfeder 29
belastet, die bestrebt ist, den Kolben 26 in eine Ruhestellung zurückzubringen, in welcher die das Sonnenrad 4 mit dem
Gehäuse 1 verbindende Kupplung gelöst ist, wenn die Kammer 27 hinter dem Kolben 26 belüftet wird.

In ähnlicher Weise wirkt die an der Innenseite des Kranzes 21 angeordnete Kupplungslamelle 23 mit einer Kupplungslamelle 31 zusammen, die auf der Eingangswelle 2 mittels
eines Zwischenstückes 32 drehfest, jedoch in Axialrichtung
der Welle verschiebbar gelagert ist. Zwischen dem scheibenförmigen Träger 8 und der damit verbundenen Kupplungslamelle 23 ist eine Tellerfeder 33 angeordnet, die bestrebt ist,
die Kupplungsscheibe 23 gegen die auf der Eingangswelle 2
drehfest angeordnete Kupplungslamelle 31 und gegen ein im
Gehäuse 1 drehbar gelagertes Widerlager 34 zu drücken, das
ebenfalls mit dem Kranz 21 am Träger 8 drehfest verbunden
und in Axialrichtung gegenüber dem Träger durch einen Anschlagring 35 festgelegt ist.

Bei dem in Fig. 1 dargestellten Betriebszustand drückt die
Tellerfeder 33 die Kupplungslamelle 23, die mit dem der
Eingangswelle 2 zugeordneten Sonnenrad 4 verbunden ist,
gegen die mit der Eingangswelle 2 verbundene Kupplungslamelle 31 und diese Kupplungslamelle gegen das ebenfalls mit dem
Sonnenrad 4 drehfest verbundene Widerlager 34. Infolgedessen
ist eine drehfeste Verbindung zwischen dem Sonnenrad 4 und
der Eingangswelle 2 hergestellt, was zu einer starren Verbindung zwischen dem Sonnenrad 4 und dem mit der Eingangswelle 2 verbundenen Steg 7 führt. Die Planetenräder 5 sind
drehfest, so daß auch das zu dem der Eingangswelle zugeordneten Planetensatz gehörende Hohlrad 6 zusammen mit der Eingangswelle 2 umläuft. In gleicher Weise ist auch ausgangsseitig die mit der Ausgangswelle 3 drehfest verbundene Kupplungslamelle 31' zwischen dem Widerlager 34' und der über den Träger 17 mit dem Sonnenrad 11 verbundenen Kupplungslamelle 23', die von der Tellerfeder 33' belastet ist, fest eingespannt. Die kraftschlüssige Verbindung zwischen der Ausgangswelle 3 und dem Sonnenrad 11 hat zur Folge, daß sich das Sonnenrad 11 und das über die Scheibe 14 mit der Ausgangswelle 3 verbundene Hohlrad 13 die gleiche Drehzahl haben, so daß die zwischen dem Sonnenrad 11 und dem Hohlrad 13 angeordneten Planetenräder 12 keine Drehbewegung ausführen kann. Demgemäß läuft auch der die Planetenräder 12 tragende Steg 15 mit der gleichen Geschwindigkeit um wie die Ausgangswelle 3. Da der Steg 15 über die Verbindungsstück 16 mit dem Hohlrad 6 des eingangsseitigen Planetensatzes verbunden ist, besteht auf diese Weise eine direkte Kopplung zwischen der Eingangswelle 2 und der Ausgangswelle 3.

Wird dagegen der Kolben 26 über die Leitung 30 mit einem Druckmedium beaufschlagt, so wird der Kolben gegen die Kraft der Tellerfeder 29 verschoben und drückt die Kupplungslamellen 24, 22, 25 gegen den im Gehäuse angebrachten Anschlag 28, so daß nunmehr die über den scheibenförmigen Träger 8 und den Kranz 21 mit dem Sonnenrad 4 drehfest verbundene, in bezug auf den Kranz 21 radial außen liegende Kupplungslamelle 22 zwischen den mit dem Gehäuse 1 drehfest verbundenen Kupplungslamellen 24, 25 festgeklemmt wird. Die im Kranz 21 geführte Kupplungslamelle 22 drückt dabei gleichzeitig axial gegen die radial innen liegende Kupplungslamelle 23 und hebt diese Kupplungslamelle gegen die Kraft der Tellerfeder 33 von der mit der Eingangswelle 2 über das Zwischenstück 32 verbundenen Kupplungslamelle 31 ab, so daß die Verbindung des Sonnenrades 4 mit der Eingangswelle 2 gelöst und das Sonnenrad mit dem Gehäuse 1 kraftschlüssig verbunden wird. Bei diesem Zustand steht das Sonnenrad 4 still, so daß die über den Steg 7 von der Eingangswelle 2 mitgenommenen Planetenräder 5 auf dem Sonnenrad 4 abrollt. Diese Drehbewegung wird dann auf das Hohlrad 6 übertragen, dessen nun von der Drehzahl der Eingangswelle 2 abweichende Drehzahl sich aus dem Verhältnis der Zähnezahl des Sonnenrades 4 und des Hohlrades 6 ergibt.

In gleicher Weise läßt sich auch durch Beaufschlagen des Kolbens 26' das der Ausgangswelle 3 zugeordnete Sonnenrad 11 mit dem Gehäuse 1 kraftschlüssig verbinden, während gleichzeitig die vorher bestehende Verbindung mit der Abtriebswelle 3 gelöst wird. Auch hier rollen dann wieder die vom umlaufenden Steg 15 angetriebenen Planetenräder 12 auf dem stillstehenden Sonnenrad 11 ab, so daß das Hohlrad 13 mit einer Drehzahl in Umdrehung versetzt wird, die entsprechend dem Verhältnis der Zähnezahlen des Sonnenrades 11 und des Hohlrades 13 von der Drehzahl des Steges 15 abweicht.

Damit ergeben sich außer der eingangs beschriebenen, direkten Kopplung noch drei weitere Betriebszustände, nämlich ein erster nur mit gehäusefestem Sonnenrad 4 des der Eingangswelle 2 zugeordneten Planetensatzes, ein zweiter nur mit gehäusefestem Sonnenrad 11 des der Ausgangswelle 3 zugeordneten Planetensatzes und ein vierter mit gehäusefesten Sonnenrädern beider Planetensätze. Es kommen damit die Übersetzungen der beiden Planetensätze wahlweise einzeln oder aber in Kombination zur Wirkung.

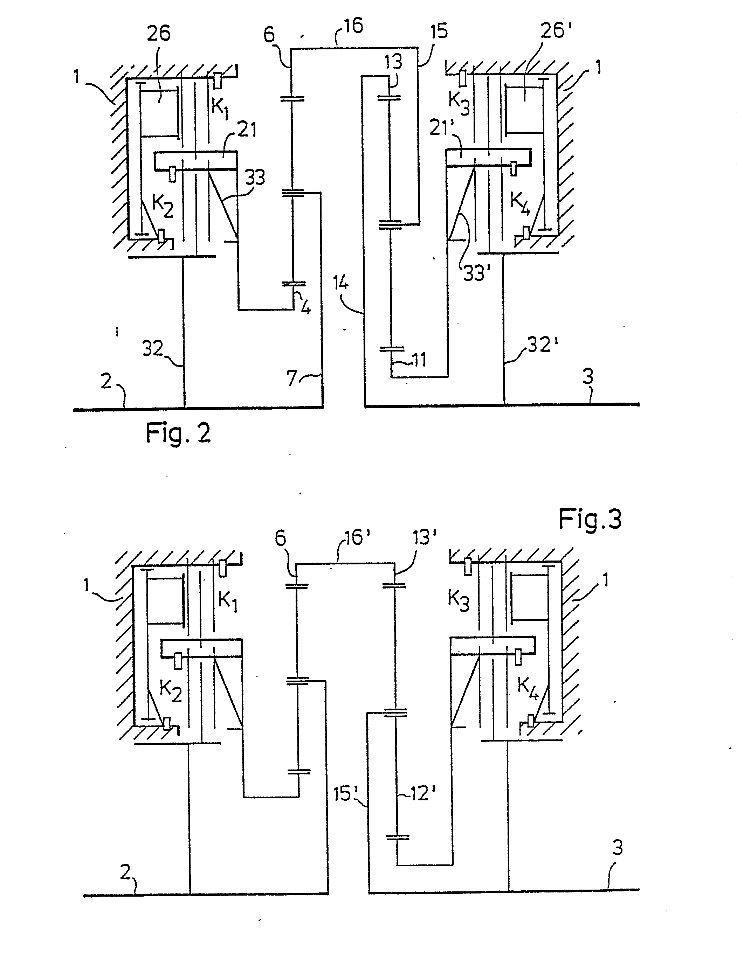

Fig. 2 zeigt noch einmal schematisch den Aufbau des in
Fig. 1 dargestellten Getriebes. Die in bezug auf die Kränze 21, 21' außen liegenden Kupplungen K1, K3 bewirken eine
kraftschlüsssige Verbindung des zugeordneten Sonnenrades 4
bzw. 11 mit dem Gehäuse 1, wenn der Kolben 26 bzw. 26' mit
einem Druckmedium beaufschlagt ist. Sind die Kolben 26, 26'
dagegen entlastet, so werden die in bezug auf den Kranz 21
bzw. 21' radial innen liegenden Kupplungen K2, K4 durch die
Kraft der Tellerfeder 33 bzw. 33' geschlossen, so daß nunmehr die Sonnenräder 4, 11 über die Zwischenstücke 32, 32'
mit der Eingangswelle 2 bzw. der Ausgangswelle 3 kraftschlüssig verbunden sind. Bei den in Fig. 2 angegebenen
Zähnezahlen ergeben sich für die mittels der Kupplungen
schaltbaren vier Gänge ein Übersetzungsverhältnis von 1,0,
wenn bei entlüftetem Kolben 26, 26' die Kupplungen K2 und K4
geschlossen sind. Ist durch Betätigen des eingangsseitigen
Kolbens 26 die Kupplung K1 geschlossen, während der ausgangsseitige Kolben 26' nicht beaufschlagt ist, so daß die
Kupplung K4 geschlossen ist, ergibt sich ein Übersetzungsverhältnis für den 3. Gang von 0,718. Ist umgekehrt der
eingangsseitige Kolben 26 entlüftet und der ausgangsseitige
Kolben 26' beaufschlagt, so ergibt sich ein Übersetzungsverhältnis für den zweiten Gang von 0,847. Sind endlich beide
Kolben beaufschlagt, ergibt sich das Übersetzungsverhältnis
aus dem Produkt der Übersetzungsverhältnisse der beiden
Planetensätze zu 0,609.

Fig. 3 zeigt eine Variante des anhand der Fig. 1 und 2
erläuterten Umlaufgetriebes, die lediglich darin besteht,
daß bei dem ausgangsseitigen Planetensatz mit der Ausgangswelle 103 nicht das Hohlrad, sondern ebenso wie bei dem
eingangsseitigen Planetensatz ebenfalls der die Planetenrä-

0245720

der 12'tragende Steg 15' mit der Ausgangswelle 3 verbunden ist. Demgemäß verbindet das Verbindungsstück 16' auch das eingangsseitige Hohlrad 6 mit dem ausgangsseitigen Hohlrad 13'. In diesem Fall ergibt sich bei gleichen Zähnezahlen eine Folge von vier Gängen mit den Übersetzungen 1,179 - 1,0 - 0,847 - 0,718.

Es ist ohne weiteres ersichtlich, daß es - zur Modifikation des Getriebes nur eines Austausches der Scheibe 14 gegen einen Steg 15' und des Verbindungsstückes 16 mit dem Hohlrad 6 und dem Steg 15 gegen ein Verbindungsstück 16' bedarf, das statt des Steges 15 das zweite Hohlrad 13' trägt. Die Möglichkeit, unter Verwendung des gleichen grundsätzlichen Aufbaues Getriebe mit verschiedenen Übersetzungsverhältnissen herzustellen, ist ein weiterer Vorteil des Umlaufgetriebes mit dem erfindungsgemäßen Aufbau.

Es versteht sich, daß die Erfindung nicht auf das dargestellte Ausführungsbeispiel beschränkt ist, sondern die konstruktiven Einzelheiten des Aufbaues eines solchen Getriebes in vielfältiger Weise abgewandelt werden können, ohne den Rahmen der Erfindung zu verlassen.

1

## Patentansprüche

1. Viergang-Umlaufgetriebe mit zwei axial hintereinander
angeordneten Planetensätzen, von denen zum Schalten
der Gänge jeder ein mittels Kupplungen wahlweise mit
dem Gehäuse oder einem anderen Getriebeteil verbindbares Getriebeteil aufweist,

dadurch gekennzeichnet,

daß die Sonnenräder (4, 11) beider Planetensätze
entweder mit dem Gehäuse (1) oder der zugeordneten
Eingangswelle (2) bzw. Ausgangswelle (3) verbindbar
sind, daß die Eingangswelle (2) mit dem Steg (7) des
ersten Planetensatzes und die Ausgangswelle (3) entweder mit dem Hohlrad (13) oder ebenfalls mit dem
Steg (15') des zweiten Planetensatzes verbunden ist
und daß das Hohlrad (6) des ersten Planetensatzes im
ersten Fall mit dem Steg (15) und im zweiten Fall mit
dem Hohlrad (13') des zweiten Planetensatzes verbunden
ist.

2. Viergang-Umlaufgetriebe nach Anspruch 1, dadurch
gekennzeichnet daß die Kupplungen ($K_1$ bis $K_4$)
axial vor bzw. hinter dem zugeordneten Planetensatz
und die die Sonnenräder (4, 11) mit den Wellen (2, 3)
verbindenden Kupplungen ($K_2$, $K_4$) jeweils innerhalb
der die Sonnenräder (4, 11) mit dem Gehäuse (1) verbindenden Kupplungen ($K_1$, $K_3$) angeordnet sind.

3. Viergang-Umlaufgetriebe nach Anspruch 2, dadurch gekennzeichnet, daß die Sonnenräder (4, 11) jeweils mit einem Kranz (21) verbunden sind, an dessen Außen- und Innenseiten Kupplungslamellen (22, 23) angeordnet sind, die mit gehäusefesten Kupplungslamellen (24, 25) bzw. an der zugeordneten Welle (2, 3) angebrachten Kupplungslamellen (31, 31') zusammenwirken.

4. Viergang-Umlaufgetriebe nach Anspruch 2 oder 3, dadurch gekennzeichnet, daß die Kupplungen ($K_1$ bis $K_4$) mit in Axialrichtung auf die Kupplungslamellen wirkenden hydraulischen Kolben (26, 26') versehen sind.

5. Viergang-Umlaufgetriebe nach Anspruch 4, dadurch gekennzeichnet, daß der hydraulische Kolben (26) nur jeweils auf die die Verbindung zwischen Sonnenrad (4) und Gehäuse (1) herstellenden Kupplungslamellen (22, 24, 25) wirkt, wogegen die die Verbindung zwischen Sonnenrad (4, 11) und zugeordneter Welle (2, 3) herstellenden Kupplungslamellen (23, 31, 34) von einer Feder (33) belastet werden, und daß das Schließen der die Verbindung zum Gehäuse (1) herstellenden Kupplung ($K_1$, $K_3$) eine Verschiebung der Kupplungslamellen (22, 23) am Sonnenrad (4, 11) zur Folge hat, durch die gegen die Kraft der Feder (33) die Verbindung zwischen Sonnenrad und zugeordneter Welle gelöst wird.

6. Viergang-Umlaufgetriebe nach Anspruch 5, dadurch gekennzeichnet, daß die Feder (33) eine Tellerfeder ist.

Fig.1

P 48 95 E

Fig. 2

Fig. 3

0245720

2/2

Blatt 2 (2)

P 48 95 E